# EUROPÄISCHE PATENTANMELDUNG

(11) **EP 4 729 461 A1**
(43) Veröffentlichungstag der Anmeldung: **22.04.2026**
(21) Anmeldenummer: 24207450.8
(22) Anmeldetag: 18.10.2024
(51) Int. Cl.: B66C 13/12, B66C 23/70, B66C 23/44

(54) **TELESKOPIERBARER KRANARM**

(71) Anmelder: EPSILON Kran GmbH., 5020 Salzburg (AT)
(72) Erfinder: SCHÖRGHOFER, Simon, 5412 Puch bei Hallein (AT); NEUREITER, Stefan, 5423 St. Koloman (AT)
(74) Vertreter: Torggler & Hofmann Patentanwälte - Innsbruck

(57) **Zusammenfassung**

Teleskopierbarer Kranarm (1), mit wenigstens:
- einem Ausleger (2) mit einem Lagerbereich für eine Auslegerverlängerung (3)
- einer Auslegerverlängerung (3), welche mittels Verfahrbewegungen aus dem Lagerbereich des Auslegers (2) heraus und in diesen hinein verfahrbar ist, sodass eine Spitze (4) der Auslegerverlängerung (3) mehr oder weniger weit aus dem Ausleger (2) vorsteht, wobei die Auslegerverlängerung (3) einen zumindest abschnittsweise in Form eines Hohlprofils ausgebildeten Körper aufweist
- einer Versorgungsleitung (5), die dazu geeignet ist, gleichzeitig sowohl elektrische Energie als auch Datensignale zu übertragen, wobei die Versorgungsleitung (5) vom Ausleger (2) über das Hohlprofil der Auslegerverlängerung (3) bis zur oder zumindest in die Nähe der Spitze (4) der Auslegerverlängerung (3) verläuft und so gelagert und mit einer solchen Länge ausgebildet ist, dass sie die Verfahrbewegungen mitmachen kann
- einer mechanischen Spannvorrichtung, welche die Versorgungsleitung (5) bei den
Verfahrbewegungen unter mechanischer Zugspannung hält
sowie Kran mit einem solchen teleskopierbaren Kranarm (1) und Fahrzeug (14) mit einem solchen Kran.

## Beschreibung

Die Offenbarung betrifft einen teleskopierbaren Kranarm, einen Kran mit einem solchen teleskopierbaren Kranarm und ein Fahrzeug mit einem solchen Kran.

Zum Antreiben der Verfahrbewegungen der Auslegerverlängerung relativ zum Ausleger wird häufig eine hydraulische Kolben-Zylinder-Einheit eingesetzt, die über eine Hydraulikleitung mit Hydraulikflüssigkeit versorgt wird. Die Hydraulikleitung weist üblicherweise in ihrem Mantel ein Metallgeflecht zur Verstärkung auf und fungiert so als mechanische Feder.

Häufig sind teleskopierbare Kranarme an der Spitze mit Vorrichtungen in Form von Sensoren oder Arbeitsgeräten versehen, welche mit Strom versorgt werden müssen und mit welchen ein Datenaustausch (zumindest unidirektional vom Sensor zu einer Auswerteeinheit) gewährleistet werden muss. An der Spitze der Auslegerverlängerung ist der Platz begrenzt, und jedes zusätzliche Kilogramm reduziert die Hubkraft. Versorgungsleitungen sollen so platzsparend wie möglich und geschützt angeordnet werden.

Eine bisherige Lösung sieht wie folgt aus (vgl. zum Beispiel EP 3 472 089 B1). Eine Versorgungsleitung wird verbunden mit einer bestehenden Hydraulikleitung geführt. Über die mechanische Vorspannung in der Hydraulikleitung wird ermöglicht, dass die Versorgungsleitung nicht an anderen Bauteilen anliegt oder scheuert.

Diese Lösung mit der innenliegenden und mit der Hydraulikleitung verbundenen Versorgungsleitung schützt zwar die Versorgungsleitung gegen Einflüsse von außen, es wird jedoch eine mechanische Vorspannung durch die Hydraulikleitung benötigt. Sollte es in dem System zu einem Kabelbruch kommen, müssen sowohl die Hydraulikleitung als auch die Versorgungsleitung untersucht werden. Durch die gemeinsame Führung mit der Hydraulikleitung ist der mögliche Durchmesser der Versorgungsleitung durch die Hydraulikleitung begrenzt. Der Einsatz mehrpoliger Versorgungsleitungen ist nicht möglich.

Andere bisherige Lösungen sehen eine drahtlose Verbindung zur Spitze der Auslegerverlängerung vor, die mittels einer Batterie mit Strom versorgt werden müssen. Diese Lösungen benötigen damit Platz und Gewicht an der Spitze. Elektromagnetische Felder können die Übertragung stören. Eine Störung kann bei einem drahtlosen System nicht leicht festgestellt werden.

Es ist eine Aufgabe, einen teleskopierbaren Kranarm, einen Kran mit einem solchen teleskopierbaren Kranarm und ein Fahrzeug mit einem solchen Kran bereitzustellen, bei welchen Nachteile der bisherigen Lösungen vermieden werden.

Diese Aufgabe wird gelöst durch einen teleskopierbaren Kranarm mit den Merkmalen des Anspruchs 1, einem Kran mit einem solchen teleskopierbaren Kranarm und ein Fahrzeug mit einem solchen Kran.

Ein solcher teleskopierbarer Kranarm weist wenigstens auf:
- einen Ausleger
- eine Auslegerverlängerung
- eine Versorgungsleitung
- eine mechanische Spannvorrichtung

Der Ausleger weist einen Lagerbereich für die Auslegerverlängerung auf.

Die Auslegerverlängerung ist mittels Verfahrbewegungen aus dem Lagerbereich des Auslegers heraus und in diesen hinein verfahrbar, sodass eine Spitze der Auslegerverlängerung mehr oder weniger weit aus dem Ausleger vorsteht, wobei die Auslegerverlängerung einen zumindest abschnittsweise in Form eines Hohlprofils ausgebildeten Körper aufweist.

Die Versorgungsleitung ist dazu geeignet, gleichzeitig sowohl elektrische Energie als auch Datensignale zu übertragen, wobei die Versorgungsleitung vom Ausleger über das Hohlprofil der Auslegerverlängerung (also im Inneren der Auslegerverlängerung) bis zur oder zumindest in die Nähe der Spitze der Auslegerverlängerung verläuft und so gelagert und mit einer solchen Länge ausgebildet ist, dass sie die Verfahrbewegungen mitmachen kann. Die gleichzeitige Übertragung von elektrischer Energie und Datensignalen ist möglich, weil keine gemeinsame Führung mit einer Hydraulikleitung erfolgen muss.

Die mechanische Spannvorrichtung hält die Versorgungsleitung bei den Verfahrbewegungen unter mechanischer Zugspannung. Durch das Vorsehen einer dedizierten mechanischen Spannvorrichtung für die Versorgungsleitung ist es nicht mehr erforderlich, Federeigenschaften einer Hydraulikleitung auszunutzen. Die Versorgungsleitung kann unabhängig von einer Hydraulikleitung verlegt werden, wodurch mehr Platz zur Verfügung steht und die Vorteile gegenüber drahtlosen Lösungen beibehalten werden können.

Vorteilhafte Ausführungsformen sind in den abhängigen Ansprüchen definiert.

Bei einer Ausführungsform ist vorgesehen, dass die wenigstens eine mechanische Spannvorrichtung im Bereich der Spitze der Auslegerverlängerung angeordnet ist.

Bei einer Ausführungsform ist vorgesehen, dass die wenigstens eine mechanische Spannvorrichtung wenigstens einen ersten Spannteil aufweist, welcher fest mit der Auslegerverlängerung verbunden ist und wenigstens einen zweiten Spannteil aufweist, welcher fest mit der Versorgungsleitung verbunden ist, wobei die mechanische Spannvorrichtung wenigstens einen Kraftspeicher aufweist, welcher den wenigstens einen ersten Spannteil relativ zum wenigstens einen zweiten Spannteil mit Kraft beaufschlägt, sodass die wenigstens eine mechanische Spannvorrichtung die Versorgungsleitung bei den Verfahrbewegungen unter mechanischer Zugspannung hält.

Bei einer Ausführungsform ist vorgesehen, dass der wenigstens erste Spannteil und/oder der wenigstens zweite Spannteil und/oder der wenigstens eine Kraftspeicher im Hohlraum der Auslegerverlängerung angeordnet sind.

Bei einer Ausführungsform ist vorgesehen, dass wenigstens ein Kraftspeicher in Form einer Schraubenfeder ausgebildet ist und es ist bevorzugt vorgesehen, dass die wenigstens eine Versorgungsleitung durch die zumindest eine Schraubenfeder der Länge nach hindurch verläuft.

Dabei kann vorgesehen sein, dass der wenigstens eine erste Spannteil der wenigstens einen mechanischen Spannvorrichtung einen mit der Auslegerverlängerung verbundenen hülsenförmigen Abschnitt aufweist, in welchem die zumindest eine Schraubenfeder zumindest abschnittsweise gelagert ist.

Dabei kann vorgesehen sein, dass die wenigstens eine Versorgungsleitung durch den hülsenförmigen Abschnitt und bevorzugt auch durch die zumindest eine Schraubenfeder hindurch verläuft.

Bei einer mechanischen Spannvorrichtung mit wenigstens einem ersten Spannteil und wenigstens einem zweiten Spannteil kann vorgesehen sein, dass der wenigstens eine zweite Spannteil der wenigstens einen mechanischen Spannvorrichtung wenigstens ein Verbindungsteil aufweist, über welchen der wenigstens eine zweite Spannteil fest mit der Versorgungsleitung an zumindest einer definierten Stelle entlang der Versorgungsleitung verbunden ist.

Dabei kann vorgesehen sein, dass wenigstens ein Verbindungsteil des wenigstens einen zweiten Spannteils als Kabelklemme ausgebildet ist.

Bei einer Ausführungsform ist wenigstens eine Hydraulikleitung vorgesehen, die vom Ausleger über das Hohlprofil der Auslegerverlängerung bis zur oder zumindest in die Nähe der Spitze der Auslegerverlängerung verläuft und so gelagert ist, dass sie die Verfahrbewegungen mitmachen kann, wobei die wenigstens eine Hydraulikleitung getrennt von der wenigstens einen Versorgungsleitung und deren wenigstens einen mechanischen Spannvorrichtung verläuft. Die wenigstens eine Hydraulikleitung kann beispielsweise zum Versorgen einer hydraulischen Kolben-Zylinder-Einheit vorgesehen sein, über welche die Verfahrbewegungen antreibbar sind. Zusätzlich oder alternativ kann die wenigstens eine Hydraulikleitung zum Beispiel zum Versorgen eines hydraulisch angetriebenen Arbeitsgeräts vorgesehen sein, welches an der Auslegerverlängerung angeordnet sein kann. Üblicherweise weist die wenigstens eine Hydraulikleitung in ihrem Mantel ein Metallgeflecht zur Verstärkung auf und fungiert so als mechanische Feder, sodass keine zusätzliche gesonderte mechanische Spannvorrichtung für die wenigstens eine Hydraulikleitung erforderlich ist.

Dabei kann vorgesehen sein, dass am Ausleger wenigstens eine Trennstelle für zwei Abschnitte der wenigstens einen Hydraulikleitung angeordnet ist, vorzugsweise in Form eines Blechs, wobei die Versorgungsleitung über eine Kabelklemme an der Trennstelle angeordnet ist.

Bei einer Ausführungsform ist vorgesehen, dass die Versorgungsleitung wenigstens aufweist:
- ein Stromkabel zur Übertragung von elektrischer Energie und ein Datenkabel zur Übertragung von Datensignalen, oder
- ein mindestens dreipoliges Kabel zur gleichzeitigen Übertragung von elektrischer Energie und Datensignalen, oder
- ein Hybridkabel mit wenigstens einem Stromkabel und wenigstens einer Glasfaserleitung zur Übertragung von Datensignalen
Diese Ausführungsformen ermöglichen auf einfache Weise die gleichzeitige Übertragung von elektrischer Energie und Datensignalen. Ist mehr als ein Kabel vorgesehen, können die Kabel in einem gemeinsamen Mantel verbunden sein, welcher mit der wenigstens einen mechanischen Spannvorrichtung verbunden ist, oder einzeln mit der wenigstens mechanischen Spannvorrichtung verbunden werden.

Bei einer Ausführungsform ist vorgesehen, dass im Bereich der Spitze der Auslegerverlängerung wenigstens eine Vorrichtung - vorzugsweise ein Sensor und/oder ein Arbeitsgerät (z. B. ein Rotator) - angeordnet ist, welche durch die wenigstens eine Versorgungsleitung mit elektrischer Energie versorgbar ist und über die wenigstens eine Versorgungsleitung Datensignale senden und/oder empfangen kann. Es kann vorgesehen sein, dass ein und dieselbe Vorrichtung gleichzeitig mit Strom versorgt wird und Datensignale senden und/oder empfangen kann oder dass wenigstens zwei Vorrichtungen vorhanden sind, von denen eine nur mit Strom versorgt wird und die andere nur Datensignale senden und/oder empfangen kann. Durch die wenigstens eine Versorgungsleitung wird in jedem Fall gleichzeitig sowohl elektrische Energie als auch Datensignale übertragen.

Bei einer Ausführungsform eines Krans mit einem teleskopierbaren Kranarm kann vorgesehen sein, dass der wenigstens eine teleskopierbare Kranarm gelenkig an zumindest einem weiteren Kranarm gelagert ist und wenigstens eine mit elektrischer Energie und/oder Datensignalen zu versorgende Vorrichtung mit der Auslegerverlängerung verbunden ist und die mechanische Spannvorrichtung angeordnet ist:
- an der Auslegerverlängerung, bevorzugt im Bereich der Spitze der Auslegerverlängerung, oder
- am zumindest einem weiteren Kranarm, oder
- an oder in der wenigstens einen Vorrichtung (im Falle eines Rotators bevorzugt am drehfesten Teil desselben)

Besonders bevorzugt kommt der teleskopierbare Kranarm bei einem Ladekran oder Forstkran zum Einsatz.

Ausführungsformen werden anhand der Figuren diskutiert.
Figur 1 zeigt ein Ausführungsbeispiel eines teleskopierbaren Kranarms.
Figur 2 zeigt eine mechanische Spannvorrichtung.
Figur 3 zeigt eine mechanische Spannvorrichtung.
Figur 4 zeigt ein Ausführungsbeispiel eines teleskopierbaren Kranarms.
Figur 5 zeigt ein Ausführungsbeispiel eines teleskopierbaren Kranarms.
Figur 6 zeigt eine Detailansicht zu einem Ausführungsbeispiel eines teleskopierbaren Kranarms.
Figur 7 zeigt eine Detailansicht zu einem Ausführungsbeispiel eines teleskopierbaren Kranarms.
Figur 8 zeigt ein Fahrzeug mit einem Kran, welcher einen teleskopierbaren Kranarm aufweist.

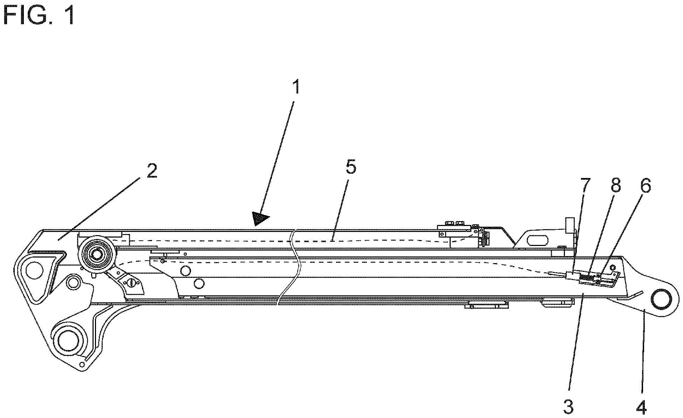

Figur 1 zeigt einen teleskopierbaren Kranarm 1, mit:
- einem Ausleger 2
- einer Auslegerverlängerung 3
- einer Versorgungsleitung 5
- eine Hydraulikleitung 9
- einer mechanischen Spannvorrichtung

Der Ausleger 2 weist einen Lagerbereich für die Auslegerverlängerung 3 auf.

Die Auslegerverlängerung 3 ist mittels Verfahrbewegungen aus dem Lagerbereich des Auslegers 2 heraus und in diesen hinein verfahrbar ist, sodass eine Spitze 4 der Auslegerverlängerung 3 mehr oder weniger weit aus dem Ausleger 2 vorsteht, wobei die Auslegerverlängerung 3 einen zumindest abschnittsweise in Form eines Hohlprofils ausgebildeten Körper aufweist. Eine Antriebsvorrichtung zum Antreiben der Verfahrbewegungen ist nicht gezeigt.

Die Hydraulikleitung 9 verläuft vom Ausleger 2 über das Hohlprofil der Auslegerverlängerung 3 bis zur oder zumindest in die Nähe der Spitze 4 der Auslegerverlängerung 3 und ist so gelagert, dass sie die Verfahrbewegungen mitmachen kann, wobei die wenigstens eine Hydraulikleitung 9 getrennt von der wenigstens einen Versorgungsleitung 5 und deren mechanischer Spannvorrichtung verläuft.

Die Versorgungsleitung 5 ist dazu geeignet, gleichzeitig sowohl elektrische Energie als auch Datensignale zu übertragen, wobei die Versorgungsleitung 5 vom Ausleger 2 über das Hohlprofil der Auslegerverlängerung 3 bis zur oder zumindest in die Nähe der Spitze 4 der Auslegerverlängerung 3 verläuft und so gelagert und mit einer solchen Länge ausgebildet ist, dass sie die Verfahrbewegungen mitmachen kann.

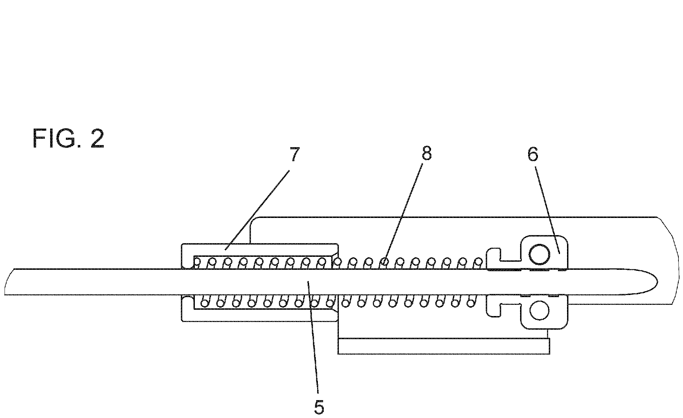

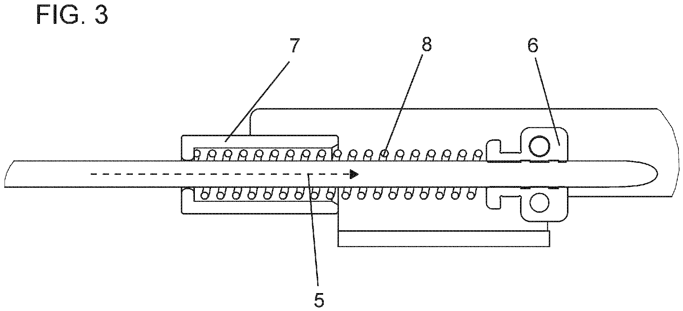

Die mechanische Spannvorrichtung hält die Versorgungsleitung 5 bei den Verfahrbewegungen unter mechanischer Zugspannung und ist in diesem Ausführungsbeispiel im Bereich der Spitze 4 der Auslegerverlängerung 3 angeordnet, wobei die mechanische Spannvorrichtung hier aufweist (vgl. auch die Figuren 2 und 3):
- einen ersten Spannteil 6, welcher fest mit der Auslegerverlängerung 3 verbunden ist
- einen zweiten Spannteil 7, welcher fest mit der Versorgungsleitung 5 verbunden ist
- einen Kraftspeicher 8, welcher den ersten Spannteil 6 relativ zum zweiten Spannteil 7 mit Kraft beaufschlägt, sodass die mechanische Spannvorrichtung die Versorgungsleitung 5 bei den Verfahrbewegungen unter mechanischer Zugspannung hält

Im gezeigten Ausführungsbeispiel sind der erste Spannteil 6, der zweite Spannteil 7 und der Kraftspeicher 8 im Inneren des Hohlraums der Auslegerverlängerung 3 angeordnet.

Der Kraftspeicher 8 ist in Form einer Schraubenfeder ausgebildet ist und die Versorgungsleitung 5 verläuft durch die Schraubenfeder der Länge nach hindurch.

Der erste Spannteil 6 weist einen mit der Auslegerverlängerung 3 verbundenen hülsenförmigen Abschnitt auf, in welchem die Schraubenfeder zumindest abschnittsweise gelagert ist, wobei die Versorgungsleitung 5 durch den hülsenförmigen Abschnitt und auch durch die Schraubenfeder hindurch verläuft.

Der zweite Spannteil 7 weist einen Verbindungsteil auf, über welchen der zweite Spannteil 7 fest mit der Versorgungsleitung 5 an zumindest einer definierten Stelle entlang der Versorgungsleitung 5 verbunden ist und welcher im gezeigten Ausführungsbeispiel als Kabelklemme ausgebildet ist.

Am Ausleger 2 ist wenigstens eine Trennstelle 12 für zwei Abschnitte der Hydraulikleitung 9 angeordnet, vorzugsweise in Form eines Blechs, wobei die Versorgungsleitung 5 über eine Kabelklemme 13 an der Trennstelle 12 angeordnet ist.

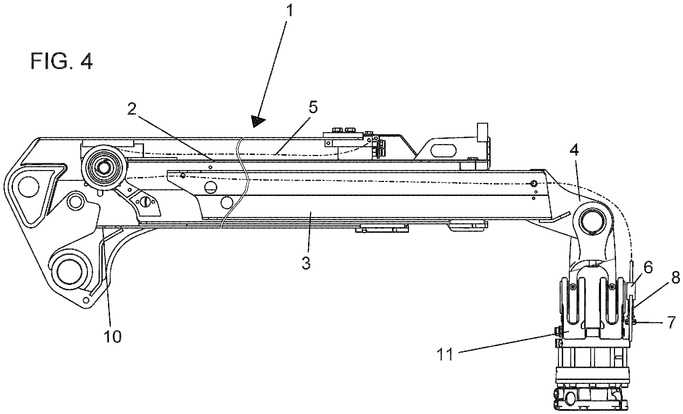

In Figur 4 ist der teleskopierbare Kranarm 1 mit einem weiteren Kranarm 10 verbunden und ist an der Spitze 4 der Auslegerverlängerung 3 eine Vorrichtung 11 in Form eines Rotators angeordnet. Die mechanische Spannvorrichtung ist in diesem Ausführungsbeispiel am drehfesten Teil des Rotators angeordnet.

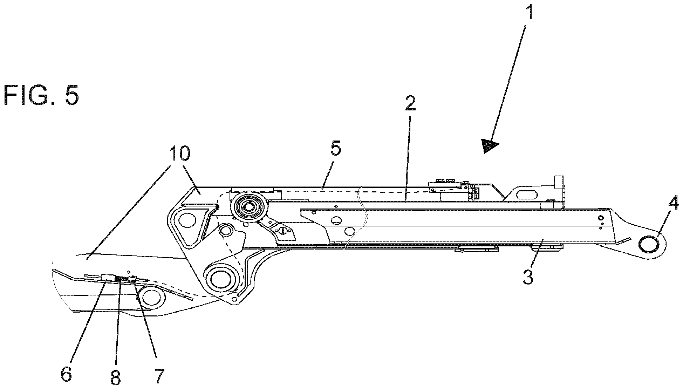

In Figur 5 ist der teleskopierbare Kranarm 1 mit zwei weiteren Kranarmen 10 verbunden, von denen einer einen Hauptarm darstellt. Die mechanische Spannvorrichtung ist in diesem Ausführungsbeispiel am Hauptarm angeordnet.

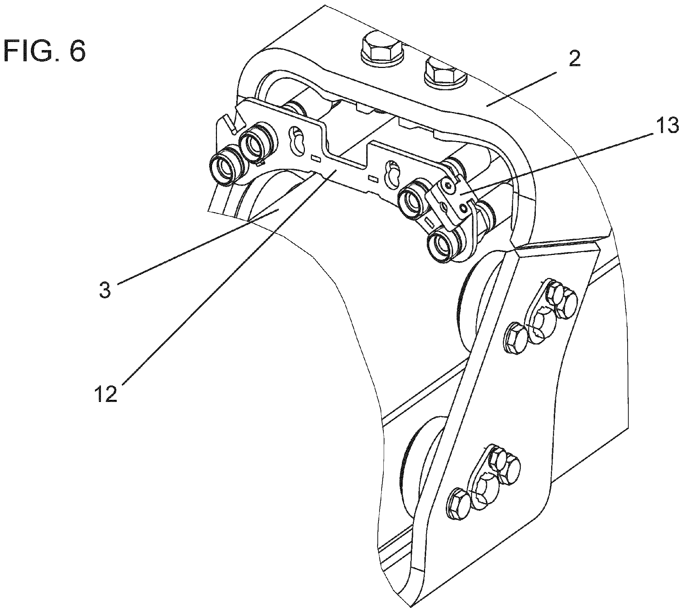

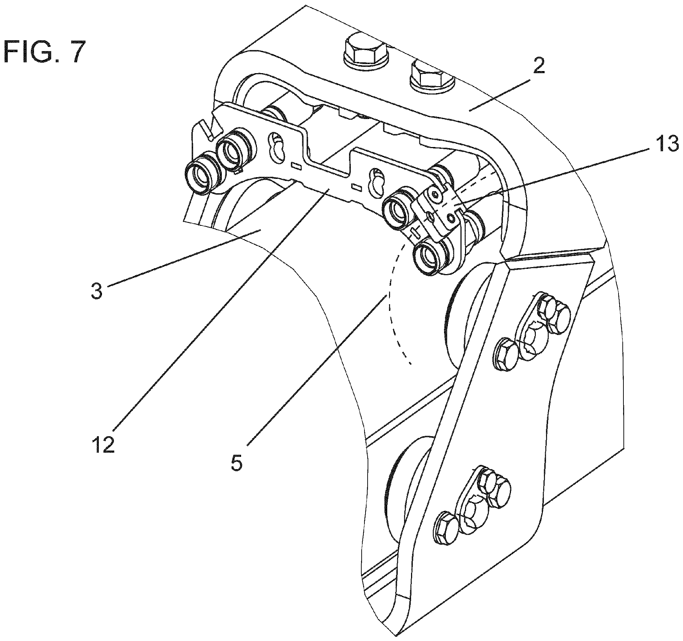

In den Figuren 6 und 7 ist erkennbar, dass am Ausleger 2 eine Trennstelle 12 für zwei Abschnitte der Hydraulikleitung 9 angeordnet ist, hier in Form eines Blechs, wobei die Versorgungsleitung 5 über eine Kabelklemme 13 an der Trennstelle 12 angeordnet ist.

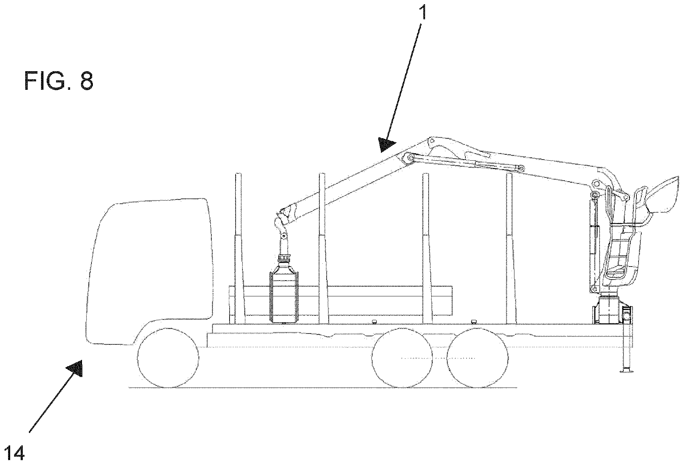

Figur 8 zeigt ein Fahrzeug 14 mit einem Kran, welcher einen teleskopierbaren Kranarm 1 nach einem der gezeigten Ausführungsbeispiele aufweist.

### Bezugszeichen:

- 1: teleskopierbarer Kranarm
- 2: Ausleger
- 3: Auslegerverlängerung
- 4: Spitze der Auslegerverlängerung
- 5: Versorgungsleitung
- 6: erster Spannteil der mechanischen Spannvorrichtung
- 7: zweiter Spannteil der mechanischen Spannvorrichtung#
- 8: Kraftspeicher
- 9: Hydraulikleitung
- 10: weiterer Kranarm
- 11: Arbeitsgerät
- 12: Trennstelle
- 13: Kabelklemme
- 14: Fahrzeug

## Patentansprüche

1. Teleskopierbarer Kranarm (1), mit wenigstens:
- einem Ausleger (2) mit einem Lagerbereich für eine Auslegerverlängerung (3)
- einer Auslegerverlängerung (3), welche mittels Verfahrbewegungen aus dem Lagerbereich des Auslegers (2) heraus und in diesen hinein verfahrbar ist, sodass eine Spitze (4) der Auslegerverlängerung (3) mehr oder weniger weit aus dem Ausleger (2) vorsteht, wobei die Auslegerverlängerung (3) einen zumindest abschnittsweise in Form eines Hohlprofils ausgebildeten Körper aufweist
- einer Versorgungsleitung (5), die dazu geeignet ist, gleichzeitig sowohl elektrische Energie als auch Datensignale zu übertragen, wobei die Versorgungsleitung (5) vom Ausleger (2) über das Hohlprofil der Auslegerverlängerung (3) bis zur oder zumindest in die Nähe der Spitze (4) der Auslegerverlängerung (3) verläuft und so gelagert und mit einer solchen Länge ausgebildet ist, dass sie die Verfahrbewegungen mitmachen kann
- einer mechanischen Spannvorrichtung, welche die Versorgungsleitung (5) bei den Verfahrbewegungen unter mechanischer Zugspannung hält.

2. Kranarm nach dem vorangehenden Anspruch, wobei die wenigstens eine mechanische Spannvorrichtung im Bereich der Spitze (4) der Auslegerverlängerung (3) angeordnet ist.

3. Kranarm nach einem der beiden vorangehenden Ansprüche, wobei die wenigstens eine mechanische Spannvorrichtung wenigstens einen ersten Spannteil (6) aufweist, welcher fest mit der Auslegerverlängerung (3) verbunden ist und wenigstens einen zweiten Spannteil (7) aufweist, welcher fest mit der Versorgungsleitung (5) verbunden ist, wobei die wenigstens eine mechanische Spannvorrichtung wenigstens einen Kraftspeicher (8) aufweist, welcher den wenigstens einen ersten Spannteil (6) relativ zum wenigstens einen zweiten Spannteil (7) mit Kraft beaufschlägt, sodass die wenigstens eine mechanische Spannvorrichtung die Versorgungsleitung (5) bei den Verfahrbewegungen unter mechanischer Zugspannung hält.

4. Kranarm nach dem vorangehenden Anspruch, wobei der wenigstens erste Spannteil (5) und/oder der wenigstens zweite Spannteil (6) und/oder der wenigstens eine Kraftspeicher (8) im Hohlraum der Auslegerverlängerung (3) angeordnet sind.

5. Kranarm nach einem der beiden vorangehenden Ansprüche, wobei wenigstens ein Kraftspeicher (8) in Form einer Schraubenfeder ausgebildet ist und bevorzugt vorgesehen ist, dass die wenigstens eine Versorgungsleitung (5) durch die zumindest eine Schraubenfeder der Länge nach hindurch verläuft.

6. Kranarm nach dem vorangehenden Anspruch, wobei der wenigstens eine erste Spannteil (6) der wenigstens einen mechanischen Spannvorrichtung einen mit der Auslegerverlängerung (3) verbundenen hülsenförmigen Abschnitt aufweist, in welchem die zumindest eine Schraubenfeder zumindest abschnittsweise gelagert ist.

7. Kranarm nach dem vorangehenden Anspruch, wobei die wenigstens eine Versorgungsleitung (5) durch den hülsenförmigen Abschnitt und bevorzugt auch durch die zumindest eine Schraubenfeder hindurch verläuft.

8. Kranarm nach wenigstens einem der Ansprüche 3 bis 7, wobei der wenigstens eine zweite Spannteil (6) der wenigstens einen mechanischen Spannvorrichtung wenigstens einen Verbindungsteil aufweist, über welchen der wenigstens eine zweite Spannteil (6) fest mit der Versorgungsleitung (5) an zumindest einer definierten Stelle entlang der Versorgungsleitung (5) verbunden ist.

9. Kranarm nach dem vorangehenden Anspruch, wobei wenigstens einer der Verbindungsteile des wenigstens einen zweiten Spannteils (6) als Kabelklemme ausgebildet ist.

10. Kranarm nach wenigstens einem der vorangehenden Ansprüche, wobei wenigstens eine Hydraulikleitung (9) vorgesehen ist, die vom Ausleger (2) über das Hohlprofil der Auslegerverlängerung (3) bis zur oder zumindest in die Nähe der Spitze (4) der Auslegerverlängerung (3) verläuft und so gelagert ist, dass sie die Verfahrbewegungen mitmachen kann, wobei die wenigstens eine Hydraulikleitung (9) getrennt von der wenigstens einen Versorgungsleitung (5) und deren wenigstens einen mechanischen Spannvorrichtung verläuft.

11. Kranarm nach dem vorangehenden Anspruch, wobei am Ausleger (2) wenigstens eine Trennstelle (12) für zwei Abschnitte der wenigstens einen Hydraulikleitung (9) angeordnet ist, vorzugsweise in Form eines Blechs, wobei die Versorgungsleitung (5) über eine Kabelklemme (13) an der Trennstelle (12) angeordnet ist.

12. Kranarm nach wenigstens einem der vorangehenden Ansprüche, wobei die Versorgungsleitung (5) wenigstens aufweist:
- ein Stromkabel zur Übertragung von elektrischer Energie und ein Datenkabel zur Übertragung von Datensignalen, oder
- ein mindestens dreipoliges Kabel zur gleichzeitigen Übertragung von elektrischer Energie und Datensignalen, oder
- ein Hybridkabel mit wenigstens einem Stromkabel und wenigstens einer Glasfaserleitung zur Übertragung von Datensignalen

13. Kranarm nach wenigstens einem der vorangehenden Ansprüche, wobei im Bereich der Spitze (4) der Auslegerverlängerung (3) wenigstens eine Vorrichtung - vorzugsweise ein Sensor und/oder ein Arbeitsgerät (11) - angeordnet ist, welche durch die wenigstens eine Versorgungsleitung (5) mit elektrischer Energie versorgbar ist und welche über die wenigstens eine Versorgungsleitung (5) Datensignale senden und/oder empfangen kann.

14. Kran, insbesondere Ladekran oder Forstkran, mit:
- wenigstens einem teleskopierbaren Kranarm (1), mit wenigstens:
• einem Ausleger (2) mit einem Lagerbereich für eine Auslegerverlängerung (3)
• einer Auslegerverlängerung (3), welche mittels Verfahrbewegungen aus dem Lagerbereich des Auslegers (2) heraus und in diesen hinein verfahrbar ist, sodass eine Spitze (4) der Auslegerverlängerung (3) mehr oder weniger weit aus dem Ausleger (2) vorsteht, wobei die Auslegerverlängerung (3) einen zumindest abschnittsweise in Form eines Hohlprofils ausgebildeten Körper aufweist
• einer Versorgungsleitung (5), die dazu geeignet ist, gleichzeitig sowohl elektrische Energie als auch Datensignale zu übertragen, wobei die Versorgungsleitung (5) vom Ausleger über das Hohlprofil der Auslegerverlängerung (3) bis zur oder zumindest in die Nähe der Spitze (4) der Auslegerverlängerung (3) verläuft und so gelagert und mit einer solchen Länge ausgebildet ist, dass sie die Verfahrbewegungen mitmachen kann wobei bevorzugt vorgesehen ist, dass der wenigstens eine teleskopierbare Kranarm (1) gelenkig an zumindest einem weiteren Kranarm (10) gelagert ist
- einer mechanischen Spannvorrichtung, welche die Versorgungsleitung (5) bei den Verfahrbewegungen unter mechanischer Zugspannung hält.

15. Kran nach dem vorangehenden Anspruch, wobei der wenigstens eine teleskopierbare Kranarm (1) gelenkig an zumindest einem weiteren Kranarm (10) gelagert ist und wenigstens eine mit elektrischer Energie und/oder Datensignalen zu versorgende Vorrichtung mit der Auslegerverlängerung (3) verbunden ist und die mechanische Spannvorrichtung angeordnet ist:
- an der Auslegerverlängerung (3), bevorzugt im Bereich der Spitze (4) der Auslegerverlängerung (3), oder
- am zumindest einem weiteren Kranarm (10), oder
- an oder in der wenigstens einen Vorrichtung

16. Fahrzeug (14), insbesondere LKW, mit wenigstens einem Kran nach einem der beiden vorangehenden Ansprüche.
